# EUROPÄISCHE PATENTSCHRIFT

(11) **EP 4 357 634 B1**
(45) Veröffentlichungstag und Bekanntmachung des Hinweises auf die Patenterteilung: **23.09.2026**
(21) Anmeldenummer: 24162237.2
(22) Anmeldetag: 17.03.2022
(51) Int. Cl.: F16D 27/00, F16D 27/06

(54) **ELEKTROMAGNETISCHE BREMSE ODER KUPPLUNG**
ELECTROMAGNETIC BRAKE OR CLUTCH
FREIN OU EMBRAYAGE ÉLECTROMAGNÉTIQUE

(43) Veröffentlichungstag der Anmeldung: 24.04.2024
(62) Dokumentnummer(n) der früheren Anmeldung(en) nach Art. 76 EPÜ: 22162800.1 / 4 246 008
(73) Patentinhaber: KEB Automation KG, 32683 Barntrup (DE)
(72) Erfinder: Fliedner, Jan Berent, 32756 Detmold (DE)
(74) Vertreter: Brinkmann & Partner

(56) Entgegenhaltungen:
- KR-A- 20190 075 314
- US-A- 3 314 512
- US-A1- 2012 111 690
- US-B2- 6 578 689

## Beschreibung

Die Erfindung betrifft eine elektromagnetische Bremse oder Kupplung, mit einem Elektromagneten, einem Permanentmagneten und einer mit dem Elektromagneten und dem Permanentmagneten zusammenwirkenden Ankerplatte, die verdrehfest, gleichwohl aber axial verschieblich auf einem Nabenkörper angeordnet ist, wobei der Elektromagnet ein Magnetgehäuse und eine davon aufgenommene Spule aufweist, wobei das Magnetgehäuse ankerplattenseitig einen einen Außenpol bereitstellenden Außenringkörper und einen einen Innenpol bereitstellenden Innenringkörper aufweist.

Elektromagnetische Bremsen oder Kupplungen der eingangs genannten Art sind aus dem Stand der Technik an sich gut bekannt, weshalb es eines gesonderten druckschriftlichen Nachweises an dieser Stelle nicht bedarf. Es sei deshalb auch nur beispielhaft auf die EP 1 848 898 B1 und die DE 10 2014 109 125 B4 verwiesen, die jeweils eine elektromagnetische Bremse oder Kupplung der eingangs genannten Art offenbaren. Als Stand der Technik sind ferner die KR 20190075314 A und die US 2012/111690 A1 zu nennen.

Die EP 1 848 898 B1 betrifft eine elektromagnetische Bremse mit einem als Außenring ausgebildeten Außenpol und einem als Innenring ausgebildeten Innenpol. Dabei sind der Außenring und der Innenring in radialer Richtung voneinander beabstandet und bilden einen Luftspalt zwischen sich aus. In diesem Luftspalt zwischen Außenring und Innenring ist ein ringförmig ausgebildeter Permanentmagnet angeordnet, dessen Querschnittsdicke zwischen seinem Innendurchmesser und seinem Außendurchmesser kleiner als seine axiale Abmessung ist.

Die DE 10 2014 109 125 B4 offenbart eine elektromagnetische Polreibungskupplung oder Polreibungsbremse, die über einen Außenpol und einen Innenpol verfügt. In radialer Richtung ist zwischen Außenpol und Innenpol ein ringförmig ausgebildeter Permanentmagnet angeordnet. Mit dem Außenpol bzw. dem Innenpol wirkt eine Ankerplatte zusammen, wobei sowohl der Außenpol als auch der Innenpol ankerplattenseitig eine mit Riefen bzw. Rillen ausgestattete Reibfläche aufweisen.

Die KR 20190075314 A betrifft eine Feldkerneinheit mit einer Feldspule für eine elektromagnetische Kupplung. Dabei wird die elektromagnetische Kupplung so betrieben, dass, wenn die Feldspule mit elektrischer Energie beaufschlagt wird, eine Scheibe aufgrund des wirkenden Magnetflusses an eine Reibfläche angezogen wird. Zwecks Maximierung des elektromagnetischen Flusses werden mit der KR 20190075314 A unterschiedliche geometrische Ausgestaltungen eines Feldkern vorgeschlagen. Die KR 20190075314 A betrifft allerdings nicht eine gattungsgemäße Kupplung, da es in der KR 20190075314 A an einem Permanentmagneten fehlt.

Die US 2012/111690 A1 betrifft eine Kupplung, die über einen von einem Zahnriemen angetriebenen Rotor verfügt, der mit einer Ankerplatte zusammenwirkt. Dabei weist der Rotor auf seiner der Ankerplatte abgewandten Rückseite eine ringförmige Ausnehmung auf, die eine in einen Feldkern eingesetzte Ankerspule aufnimmt. Im Bestromungsfall wird die Ankerplatte entgegen einer auf sie einwirkenden Federkraft angezogen und kann so über eine Reibfläche in Reibschluss mit dem Rotor gebracht werden.

Gemäß einer besonderen Ausführungsform dieser aus der US 2012/111690 A1 vorbekannten Kupplung kommt ein ringförmiger Permanentmagnet zum Einsatz, der in eine ankerplattenseitige Ausnehmung des Rotors eingesetzt ist. Allerdings betrifft die US 2012/111690 A1 schon deshalb nicht eine gattungsgemäße Kupplung, weil es an einem Magnetgehäuse fehlt, das ankerplattenseitig einen einen Außenpol bereitstellenden Außenringkörper und einen einen Innenpol bereitstellenden Innenringkörper aufweist.

Obgleich sich vorbekannte elektromagnetische Bremsen oder Kupplungen im alltäglichen Praxiseinsatz bewährt haben, besteht Verbesserungsbedarf, insbesondere mit Blick auf eine gesteigerte Effizienz der elektrischen Ansteuerung. Es ist deshalb die **Aufgabe** der Erfindung, eine elektromagnetische Bremse oder Kupplung der eingangs genannten Art konstruktiv dahingehend weiterzuentwickeln, dass eine gesteigerte Effizienz der elektrischen Ansteuerung ermöglicht ist.

Zur **Lösung** dieser Aufgabe wird mit der Erfindung eine elektromagnetische Bremse oder Kupplung der eingangs genannten Art vorgeschlagen, die in den begleitenden Patentansprüchen definiert

Im Unterschied zu den aus dem Stand der Technik vorbekannten Konstruktionen vermeidet die erfindungsgemäße Konstruktion einen Nebenluftspalt zwischen dem vom Außenringkörper bereitgestellten Außenpol einerseits und dem vom Innenringkörper bereitgestellten Innenpol andererseits. Nach dem Stand der Technik ist zwischen dem Außenringkörper und dem Innenringkörper der ringförmig ausgebildete Permanentmagnet, sowie ein diese Ringkörper trennender Nebenluftspalt angeordnet. Dieser Nebenluftspalt erhöht den magnetischen Widerstand zwischen dem Außenpol und dem Innenpol. Nachteilig dabei ist, dass dieser Nebenluftspalt die Effizienz der Spule reduziert und trotzdem weiterhin ein Teil des Permanentmagnetflusses über diesen Kreis geleitet wird, ohne eine Kraftwirkung an den Polflächen zu erzeugen. Diesen dem Stand der Technik anhaftenden Nachteil vermag die erfindungsgemäße Konstruktion zu überwinden.

Die erfindungsgemäße Ausgestaltung sieht vor, dass der Innenringkörper ankerplattenseitig den Permanentmagneten trägt und dass zwischen dem Innenringkörper und dem Außenringkörper ein als Magnetflussbrücke dienender und den Innenringkörper mit dem Außenringkörper verbindender Steg angeordnet ist. Der Magnetkreis der Spule des Elektromagneten ist mithin unterbrechungsfrei ausgebildet, womit auf einen Nebenluftspalt verzichtet ist, der funktionsgemäß in den Arbeitsluftspalt zwischen Elektromagneten bzw. Permanentmagneten einerseits und Ankerplatte andererseits verlegt ist. Hierdurch ist in vorteilhafter Weise eine gesteigerte Effizienz der elektrischen Ansteuerung gegeben. Zudem wird der nach dem Stand der Technik gegebene Zielkonflikt eliminiert, wonach ein kleinerer Nebenluftspalt eine höhere Wirksamkeit des Spulenkreises und ein größerer Nebenluftspalt eine größere magnetische Anzugskraft zur Folge hat. In der Konsequenz der erfindungsgemäßen Ausgestaltung kann das vorhandene Permanentmagnetmaterial effizienter genutzt werden, da keine unerwünschten magnetischen Nebenschlüsse aufgebaut werden, wodurch der Magnetmaterialeinsatz reduziert und damit eine Kostensenkung erreicht ist. Darüber hinaus wird ohne weitere ergänzenden Maßnahmen eine bessere Abdichtung und Abschirmung des die Spule des Elektromagneten aufnehmenden Spulenraums erreicht.

Von Vorteil der erfindungsgemäßen Ausgestaltung ist ferner, dass die Einhausung der Spule des Elektromagneten einen parallelen Zweig zu dem den Außenringkörper mit dem Innenringkörper verbindenden Steg ausbildet, so dass der magnetisch leitende Querschnitt im Permanentmagnetkreis erhöht ist, womit sich schlussendlich eine effizientere Nutzung des die Einhausung bildenden Materials ergibt. Dies ermöglicht konstruktiv einen verringerten Bauraum sowie geringere Materialkosten.

Im Ergebnis der erfindungsgemäßen Konstruktion wird insgesamt sowohl eine gesteigerte Effizienz der elektrischen Ansteuerung als auch eine effektivere Nutzung des Materials des Magnetgehäuses des Elektromagneten erreicht. Dies erlaubt eine optimierte Bauraumnutzung und eine Senkung der Herstellkosten, insbesondere durch eine Materialkosteneinsparung.

Gemäß einem weiteren Merkmal der Erfindung ist vorgesehen, dass der Innenringkörper, der Außenringkörper und der Steg einstückig ausgebildet sind. Es ist so insbesondere unter dem Kostenaspekt für Herstellung und Montage eine gegenüber dem Stand der Technik verbesserte Ausführung gegeben. Zudem ist es in einfacher Weise möglich, auf einen sich im späteren bestimmungsgemäßen Verwendungsfall einstellenden Magnetfluss gezielt durch eine entsprechende geometrische Formgebung Einfluss nehmen zu können, insbesondere durch die geometrische Ausgestaltung des Stegs in Dickenrichtung.

Gemäß einem weiteren Merkmal der Erfindung ist vorgesehen, dass das Magnetgehäuse einen Magnettopf aufweist, der ankerplattenseitig den Innenringkörper, den Außenringkörper sowie den Steg bereitstellt. Gemäß dieser bevorzugten Ausführungsform nimmt der Magnettopf als Teil des Magnetgehäuses im endmontierten Zustand die Spule des Elektromagneten auf. Der Magnettopf stellt mithin den Spulenraum bereit. Ankerplattenseitig dient der Magnettopf zudem dazu, den Innenringkörper, den Außenringkörper sowie den den Innenringkörper mit dem Außenringkörper verbindenden Steg bereitzustellen. Es ist so ein einstückiges Bauteil gegeben, dass sowohl als Einhausung für die Spule des Elektromagneten als auch für die Bereitstellung von Außen- und Innenpol dient. Auch hierdurch ist eine vereinfachte Ausführungsform gegeben, die leicht herzustellen und zu montieren ist und die es zudem ermöglicht, Bauraum und damit auch Material einsparen zu können.

Gemäß einem weiteren Merkmal der Erfindung ist der Magnettopf aus einem weichmagnetischen Material gebildet. Der vom Magnettopf bereitgestellte Spulenraum ist mithin vom Permanentmagneten durch ein weichmagnetisches Material abgetrennt.

Hierdurch ist der magnetisch leitende Querschnitt im Permanentmagnetkreis erhöht, was zu einer effizienteren Nutzung des permanentmagnetischen Materials führt.

Gemäß einem weiteren Merkmal der Erfindung ist der Magnettopf ankerplattenseitig geschlossen ausgebildet. "Geschlossen" meint dabei frei von Öffnungen, insbesondere nebenluftspaltfrei. Dies verringert in vorteilhafter Weise den magnetischen Widerstand zwischen den magnetischen Polen des Permanentmagneten. Dabei kann über die Dicke des den Innenringkörper mit dem Außenringkörper verbindenden Stegs in Axialrichtung der im bestimmungsgemäßen Verwendungsfall auftretende direkte Magnetfluss eingestellt werden. Dabei gilt, dass der direkte Magnetfluss umso höher ausfällt, je dicker der Steg ist, d. h. desto größer der Steg in axialer Richtung dimensioniert ist.

Gemäß einem weiteren Merkmal der Erfindung ist vorgesehen, dass der Außenringkörper den Innenringkörper in Richtung auf die Ankerplatte axial überragt. Es ist mithin eine stufenförmige Ausgestaltung gegeben, wobei der Innenringkörper gegenüber dem Außenringkörper in einer von der Ankerplatte wegführenden axialen Richtung zurückspringt. Es ist wird so eine Art Aufnahmeraum geschaffen, der im endmontierten Zustand den Permanentmagneten beherbergt.

Gemäß einem weiteren Merkmal der Erfindung ist vorgesehen, dass der vom Innenringkörper getragene Permanentmagnet ankerplattenseitig mit dem Außenringkörper bündig abschließt. Es ist so eine insgesamt ebene Anlagefläche zwischen Ankerplatte einerseits und Außenringkörper sowie Permanentmagnet andererseits geschaffen. Dabei ist der bündige Abschluss von Permanentmagnet einerseits und Außenringkörper andererseits deshalb ermöglicht, weil der Außenringkörper gegenüber dem Innenringkörper in Richtung auf die Ankerplatte axial vorsteht, wodurch der Aufnahmeraum für den Permanentmagneten geschaffen ist.

Gemäß einem weiteren Merkmal der Erfindung ist vorgesehen, dass der Permanentmagnet und/oder der Außenringkörper ankerplattenseitig eine mit der Ankerplatte zusammenwirkende Reibfläche bereitstellt. Diese Reibfläche ist gemäß einem weiteren Merkmal der Erfindung von einem Reibbelag bereitgestellt, der auf den Permanentmagneten und/oder den Außenringkörper aufgebracht ist. Auch die Ankerplatte kann mit einem entsprechenden und eine Reibfläche bereitstellenden Reibbelag ausgerüstet sein, sodass im Kontaktfall die Reibflächen der Ankerplatte einerseits und der des Permanentmagneten bzw. der des Außenringkörpers andererseits aneinander liegen.

Gemäß einem weiteren Merkmal der Erfindung ist vorgesehen, dass der Permanentmagnet von einem Ringkörper bereitgestellt ist, dessen axiale Abmessung kleiner als dessen Querschnittsdicke zwischen seinem Innendurchmesser und seinem Außendurchmesser ist. Der Ringkörper des Permanentmagneten, der auch segmentiert ausgebildet sein kann, weist mithin eine Flächennormale auf, die parallel zur Flächennormale der Ankerplatte verläuft. Die großen Flachseiten des Permanentmagneten einerseits und die der Ankerplatte andererseits sind mithin parallel zueinander ausgerichtet, womit im Unterschied zum Stand der Technik eine um 90 ° gedrehter Anordnung des ringförmig ausgebildeten Permanentmagneten gegeben ist. Aufgrund dieser im Unterschied zum Stand der Technik vorgesehenen Anordnung des Permanentmagneten im Magnetkreis ergeben sich die schon vorstehend beschriebenen Vorteile.

Weitere Vorteile und Merkmale der Erfindung ergeben sich aus der nachfolgenden Beschreibung anhand der Figuren. Dabei zeigen
- Fig. 1: in schematisch perspektivischer Darstellung eine erfindungsgemäße Ausgestaltung am Beispiel einer elektromagnetischen Bremse;
- Fig. 2: in schematischer Explosionsdarstellung die elektromagnetische Bremse nach Figur 1;
- Fig. 3: in teilgeschnittener Seitenansicht die elektromagnetische Bremse nach den Figuren 1 und 2;
- Fig. 4: in schematischer Darstellung ein Anziehvorgang bei geöffneter Ankerplatte und unbestromter Spule;
- Fig. 5: in schematischer Darstellung ein Brems-/Haltevorgang bei geschlossener Ankerplatte und unbestromter Spule und
- Fig. 6: in schematischer Darstellung ein Lüftvorgang bei geschlossener Ankerplatte und bestromter Spule.

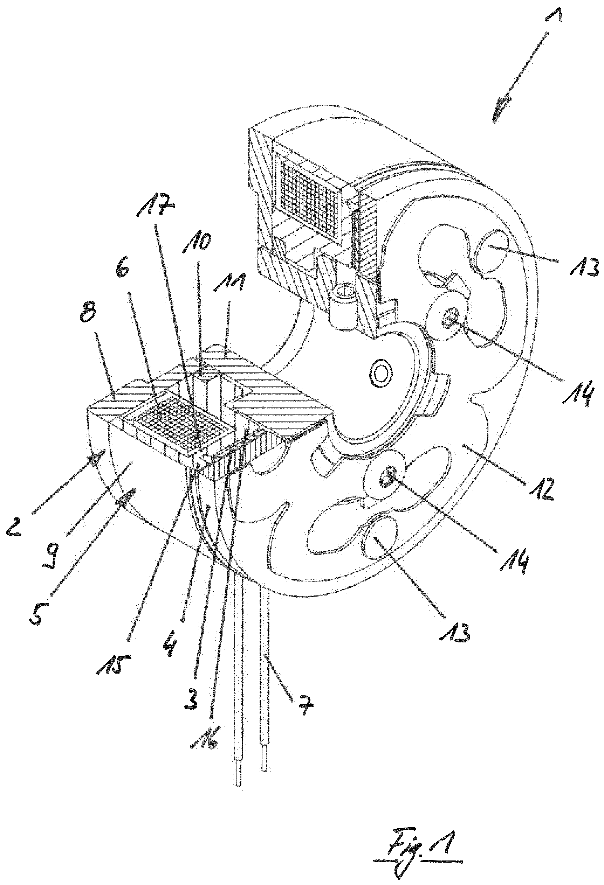

Die erfindungsgemäße Konstruktion ist in Figur 1 anhand einer elektromagnetischen Bremse 1 beispielhaft dargestellt.

Die elektromagnetische Bremse 1 verfügt in an sich bekannter Weise über einen Elektromagneten 2, einen Permanentmagneten 3 und eine Ankerplatte 4, die mit dem Elektromagneten 2 und dem Permanentmagneten 3 zusammenwirkt. Dabei ist die Ankerplatte 4 ebenfalls in an sich bekannter Weise verdrehfest, gleichwohl aber axial verschieblich auf einem Nabenkörper 11 angeordnet. Der Nabenkörper 11 kann seinerseits auf einer in den Figuren nicht weiter dargestellten Welle montiert sein.

Zwecks verdrehfester, gleichwohl aber axial verschieblicher Anordnung der Ankerplatte 4 am Nabenkörper 11 ist die Ankerplatte 4 unter Zwischenordnung eines Federelements 12 am Nabenkörper 11 befestigt. Dabei ist das Federelement 12 mittels Nieten 13 an der Ankerplatte 4 angeordnet und über Schrauben 14 lösbar mit dem Nabenkörper 11 verbunden.

Der Elektromagnet 2 verfügt über ein Magnetgehäuse 5 sowie über eine davon aufgenommene Spule 6. Dabei ist das Magnetgehäuse 5 zweiteilig ausgebildet und verfügt über einen Magnettopf 9 einerseits und einen damit vorzugsweise im endmontierten Zustand verschraubten Flansch 8 andererseits. Zur Versorgung der Spule 6 mit Strom ist ein Kabelanschluss 7 vorgesehen.

Nabenkörperseitig ist der Magnettopf 9 mit einer umlaufenden Nut ausgerüstet, in die im endmontierten Zustand ein ringförmiger Abstreifer 10 eingesetzt ist.

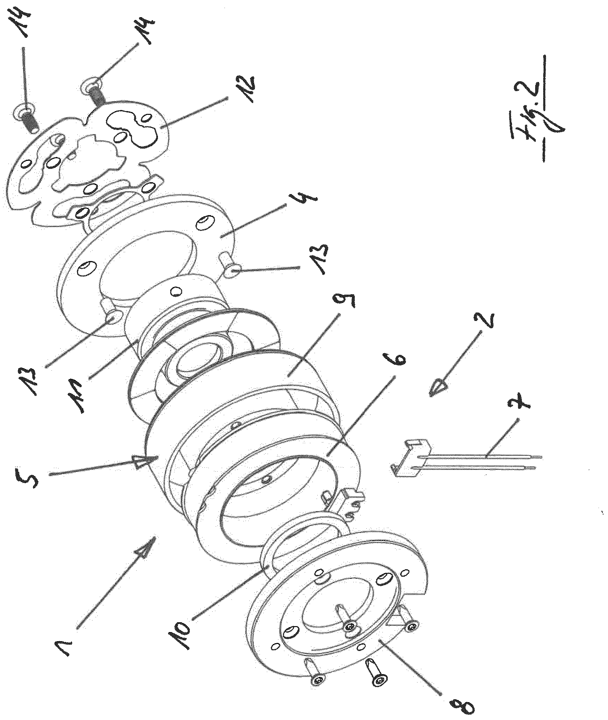

Der vorerläuterte Aufbau der erfindungsgemäßen elektromagnetischen Bremse 1 ergibt sich insbesondere aus einer Zusammenschau der Figuren 1 und 2.

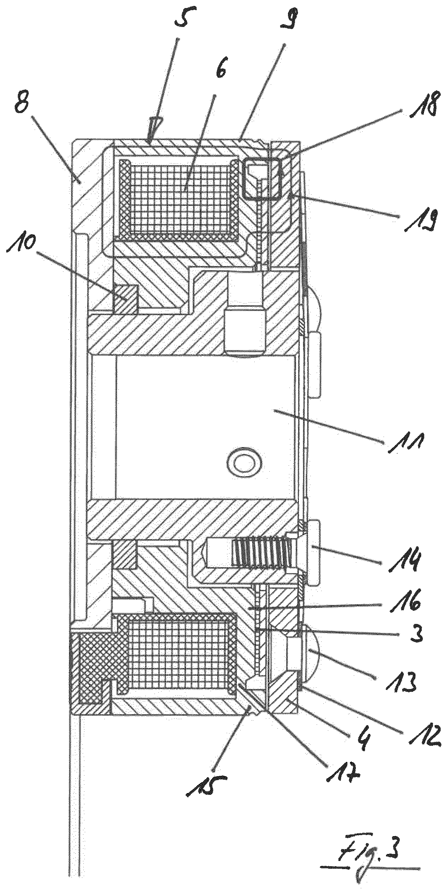

Aus einer Zusammenschau insbesondere der Figuren 1 und 3 ergibt sich ferner, dass das Magnetgehäuse 5, und zwar der Magnettopf 9 ankerplattenseitig einen einen Außenpol bereitstellenden Außenringkörper 15 sowie einen einen Innenpol bereitstellenden Innenringkörper 16 aufweist. Dabei ist erfindungsgemäß vorgesehen, dass zwischen dem Innenringkörper 16 und dem Außenringkörper 15 ein den Innenringkörper 16 mit dem Außenringkörper 15 verbindender Steg 17 angeordnet ist. Dieser Steg 17 dient als Magnetflussbrücke zwischen den beiden Polen, d. h. dem vom Außenringkörper 15 bereitgestellten Außenpol einerseits und dem vom Innenringkörper 16 bereitgestellten Innenpol andererseits.

Erfindungsgemäß ist ferner vorgesehen, dass der Innenringkörper 16 ankerplattenseitig den Permanentmagnet 3 trägt. Dabei ist der Permanentmagnet 3 von einem Ringkörper bereitgestellt, der hinsichtlich seiner Großseiten parallel zur Ankerplatte 4 ausgerichtet ist und gegebenenfalls auch mehrteilig ausgebildet sein kann. Die axiale Abmessung des Permanentmagneten 3 ist mithin kleiner als dessen Querschnittsdicke zwischen seinem Innendurchmesser und seinem Außendurchmesser.

Aufgrund des erfindungsgemäß zwischen Außenringkörper 15 und Innenringkörper 16 vorgesehenen Stegs 17 ist der magnetische Widerstand zwischen den beiden magnetischen Polen des Permanentmagneten 3 minimiert. Im Unterschied zu den aus dem Stand der Technik vorbekannten Konstruktionen ist zwischen den Ringkörpern kein Nebenluftspalt ausgebildet, was zur Verringerung des magnetischen Widerstands führt. Im Ergebnis kann so die Effizienz der Spule 6 gesteigert werden. Da keine unerwünschten magnetischen Nebenschlüsse im Gehäuse aufgebaut werden, ergibt sich zudem ein reduzierter Magnetmaterialeinsatz und damit eine Kostensenkung. Bevorzugterweise ist in diesem Zusammenhang vorgesehen, den Magnettopf 9 aus einem weichmagnetischen Material zu bilden.

Figur 3 lässt ferner anhand der Pfeile 18 und 19 den Magnetfluss des Permanentmagneten 3 erkennen, und zwar zum einen den Magnetfluss 18 über den Steg 17 und zum anderen den Magnetfluss 19 über das Magnetgehäuse 5. Dabei zeigt Figur 3 die Ankerplatte 4 in geöffneter Stellung mit unbestromter Spule 6.

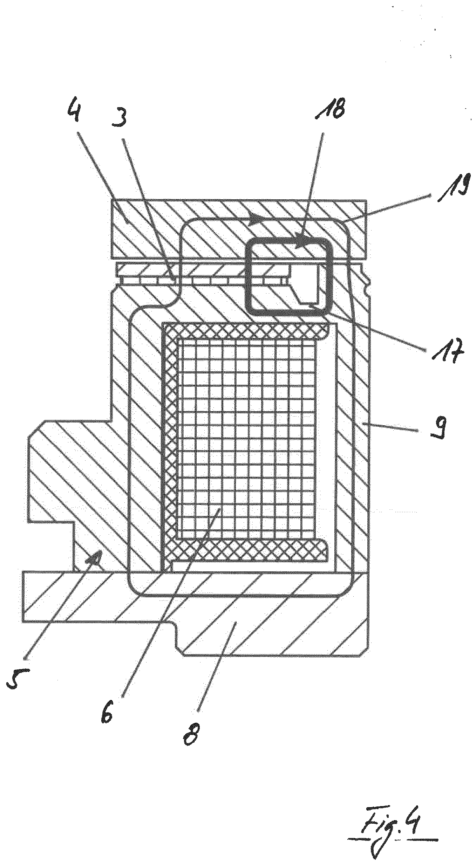

Figur 4 zeigt schematisch ebenfalls den Magnetfluss bei geöffneter Ankerplatte 4 und unbestromter Spule 6. Es ist gleichfalls in Entsprechung der Pfeile 18 und 19 der sich einstellende Magnetfluss eingezeichnet.

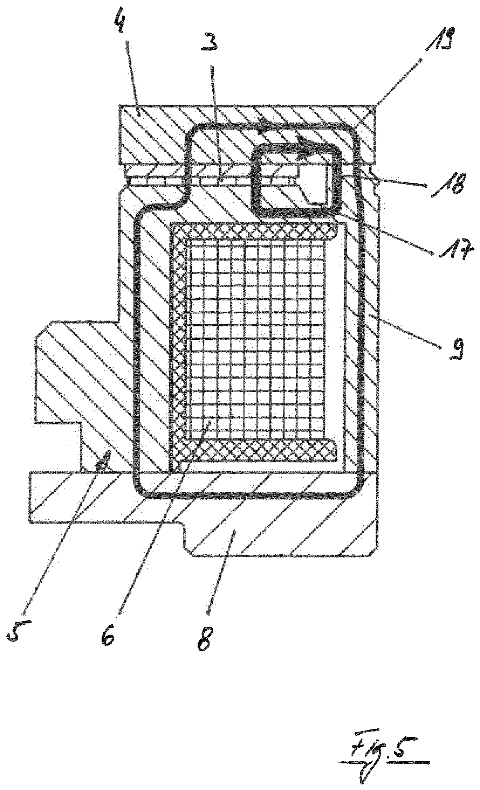

Figur 5 zeigt in schematischer Darstellung einen Brems- bzw. Haltevorgang, demgemäß die Ankerplatte 4 geschlossen und die Spule 6 unbestromt ist. Es stellt sich auch hier der Magnetfluss in Entsprechung der Pfeile 18 und 19 ein, wobei der Anteil des direkten Magnetflusses 18 über den Steg 17 gegenüber der geöffneten Stellung der Ankerplatte 4 gemäß Figur 4 erhöht ist, was durch die Strichdicke des Pfeils 18 symbolisiert ist.

Wie sich aus einer Zusammenschau der Figuren 4 und 5 ergibt, stellt sich ein direkter, kurzer und paralleler langer Magnetkreis mit geringem Widerstand ein. Dabei ist über die Stegdicke der Anteil des direkten Magnetflusses über den Steg bestimmt. Konstruktionsbedingt liegen dabei beispielsweise 80 % des Drehmoments am Außenpol an, was eine erleichterte Wärmeabfuhr erbringt. Des Weiteren kann eine effizientere Nutzung des Dauermagnetmaterials erreicht werden, wie insbesondere die Darstellung nach Figur 5 erkennen lässt.

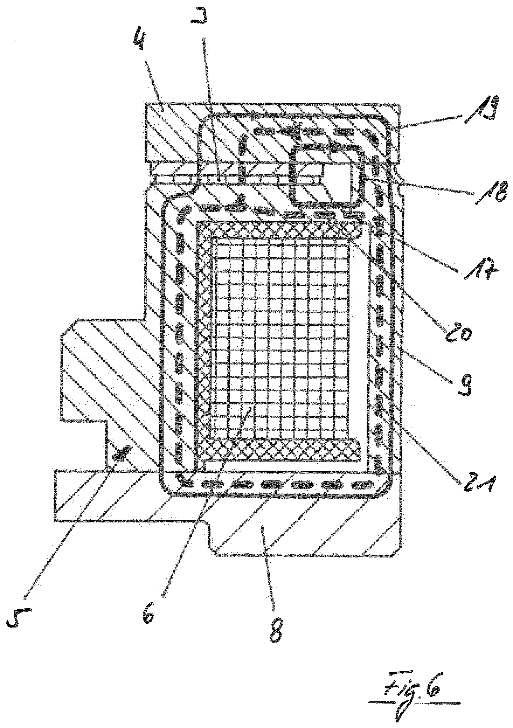

Figur 6 zeigt schließlich die Situation, wie sie sich bei geschlossener Ankerplatte 4 und bestromter Spule 6 einstellt. Es ergibt sich dann nicht nur der Magnetfluss 18 und 19 aufgrund des Permanentmagneten 3, sondern ferner ein Magnetfluss 20 und 21 aufgrund des Elektromagneten 2. Dabei stellt sich in Entsprechung der Pfeile 20 und 21 ein Magnetfluss 21 sowohl über das Magnetgehäuse 5 als auch ein Magnetfluss 20 über den Steg 17 ein. Dabei zeigt Figur 6 konkret den Lüftvorgang, wobei sich eine Gegenpolung von Spulen- und Dauermagnetkreis in den Polflächen und im langen Magnetkreis und eine Gleichpolung im kurzen Magnetkreis einstellen.

### Bezugszeichen

- 1: elektromagnetische Bremse
- 2: Elektromagnet
- 3: Permanentmagnet
- 4: Ankerplatte
- 5: Magnetgehäuse
- 6: Spule
- 7: Kabelanschluss
- 8: Flansch
- 9: Magnettopf
- 10: Abstreifer
- 11: Nabenkörper
- 12: Federelement
- 13: Niet
- 14: Schraube
- 15: Außenringkörper
- 16: Innenringkörper
- 17: Steg
- 18: Magnetfluss (Permanentmagnet)
- 19: Magnetfluss (Permanentmagnet)
- 20: Magnetfluss (Elektromagnet)
- 21: Magnetfluss (Elektromagnet)

## Patentansprüche

1. Elektromagnetische Bremse oder Kupplung, mit einem Elektromagneten (2), einem Permanentmagneten (3) und einer mit dem Elektromagneten (2) und dem Permanentmagneten (3) zusammenwirkenden Ankerplatte (4), die verdrehfest, gleichwohl aber axial verschieblich auf einem Nabenkörper (11) angeordnet ist, wobei der Elektromagnet (2) ein Magnetgehäuse (5) und eine davon aufgenommene Spule (6) aufweist, wobei das Magnetgehäuse (5) ankerplattenseitig einen einen Außenpol bereitstellenden Außenringkörper (15) und einen einen Innenpol bereitstellenden Innenringkörper (16) aufweist, derart, dass der Innenringkörper (16) ankerplattenseitig den Permanentmagneten (3) trägt und dass zwischen dem Innenringkörper (16) und dem Außenringkörper (15) ein als Magnetflussbrücke dienender und den Innenringkörper (16) mit dem Außenringköper (15) verbindender Steg (17) angeordnet ist, **dadurch gekennzeichnet, dass** ein langer Magnetkreis (19) über das Magnetgehäuse (5) und ein paralleler kurzer Magnetkreis (18) über den Steg (17) führt und wobei sich bei einem Lüftvorgang eine Gegenpolung von Spulen- und Permanentmagnetkreis (18,19, 20, 21) in den Polflächen und im langen Magnetkreis (19) und eine Gleichpolung im kurzen Magnetkreis (18) einstellen.

2. Elektromagnetische Bremse oder Kupplung nach Anspruch 1, **dadurch gekennzeichnet, dass** der Innenringkörper (16), der Außenringkörper (15) und der Steg (17) einstückig ausgebildet sind.

3. Elektromagnetische Bremse oder Kupplung nach Anspruch 1 oder 2, **dadurch gekennzeichnet, dass** das Magnetgehäuse (5) einen Magnettopf (9) aufweist, der ankerplattenseitig den Innenringkörper (16), den Außenringkörper (15) und den Steg (17) bereitstellt.

4. Elektromagnetische Bremse oder Kupplung nach einem der vorhergehenden Ansprüche, **dadurch gekennzeichnet, dass** der Magnettopf (9) aus einem weichmagnetischen Material gebildet ist.

5. Elektromagnetische Bremse oder Kupplung nach einem der vorhergehenden Ansprüche, **dadurch gekennzeichnet, dass** der Magnettopf (9) ankerplattenseitig geschlossen ausgebildet ist.

6. Elektromagnetische Bremse oder Kupplung nach einem der vorhergehenden Ansprüche, **dadurch gekennzeichnet, dass** der Außenringkörper (15) den Innenringkörper (16) in Richtung auf die Ankerplatte (4) axial überragt.

7. Elektromagnetische Bremse oder Kupplung nach einem der vorhergehenden Ansprüche, **dadurch gekennzeichnet, dass** der vom Innenringkörper (16) getragene Permanentmagnet (3) ankerplattenseitig mit dem Außenringkörper (15) bündig abschließt.

8. Elektromagnetische Bremse oder Kupplung nach einem der vorhergehenden Ansprüche, **dadurch gekennzeichnet, dass** der Permanentmagnet (3) und/oder der Außenringkörper (15) ankerplattenseitig eine mit der Ankerplatte (4) zusammenwirkende Reibfläche bereitstellen.

9. Elektromagnetische Bremse oder Kupplung nach Anspruch 8, **dadurch gekennzeichnet, dass** die Reibfläche von einem auf den Permanentmagneten (3) und/oder den Außenringkörper (15) aufgebrachten Reibbelag bereitgestellt ist.

10. Elektromagnetische Bremse oder Kupplung nach einem der vorhergehenden Ansprüche, **dadurch gekennzeichnet, dass** der Permanentmagnet (3) von einem Ringkörper bereitgestellt ist, dessen axiale Abmessung kleiner als dessen Querschnittsdicke zwischen seinem Innendurchmesser und seinem Außendurchmesser ist.

## Claims

1. Electromagnetic brake or clutch, comprising an electromagnet (2), a permanent magnet (3), and an armature plate (4), which interacts with the electromagnet (2) and the permanent magnet (3) and which is arranged on a hub body (11) in a manner rotationally fixed, but axially displaceable, wherein the electromagnet (2) has a magnet housing (5) and a coil (6) accommodated by the housing, wherein the magnet housing (5) has an armature plate-side outer ring body (15) providing an outer pole and an inner ring body (16) providing an inner pole, such that the inner ring body (16) carries the permanent magnet on the armature plate side and that a web (17) serving as a magnetic flux bridge and connecting the inner ring body (16) to the outer ring body (15) is arranged between the inner ring body (16) and the outer ring body (15), **characterized in that** a long magnetic circuit (19) runs through the magnet housing (5) and a parallel short magnetic circuit (18) runs through the web (17), wherein, during the releasing operation, opposite polarity of the coil and permanent magnet circuit (18, 19, 20, 21) occurs in the pole faces and in the long magnetic circuit (19) and same polarity occurs in the short magnetic circuit (18).

2. Electromagnetic brake or clutch according to claim 1, **characterized in that** the inner ring body (16), the outer ring body (15), and the web (17) are integrally formed.

3. Electromagnetic brake or clutch according to claim 1 or 2, **characterized in that** the magnet housing (5) includes a magnetic pot (9) that provides the inner ring body (16), the outer ring body (15), and the web (17) on the armature plate side.

4. Electromagnetic brake or clutch according to any one of the preceding claims, **characterized in that** the magnetic pot (9) is made from a soft magnetic material.

5. Electromagnetic brake or clutch according to any one of the preceding claims, **characterized in that** the magnetic pot (9) is closed on the armature plate side.

6. Electromagnetic brake or clutch according to any one of the preceding claims, **characterized in that** the outer ring body (15) protrudes axially beyond the inner ring body (16) toward the armature plate (4).

7. Electromagnetic brake or clutch according to any one of the preceding claims, **characterized in that** the permanent magnet (3) carried by the inner ring body (16) terminates flush with the outer ring body (15) on the armature plate side.

8. Electromagnetic brake or clutch according to any one of the preceding claims, **characterized in that** the permanent magnet (3) and/or the outer ring body (15) provide, on the armature plate side, a friction surface that interacts with the armature plate (4).

9. Electromagnetic brake or clutch according to claim 8, **characterized in that** the friction surface is provided by a friction facing applied to the permanent magnet (3) and/or to the outer ring body (15).

10. Electromagnetic brake or clutch according to any one of the preceding claims, **characterized in that** the permanent magnet (3) is provided by a ring body whose axial dimension is smaller than its cross-sectional thickness between its inner diameter and its outer diameter.

## Revendications

1. Frein ou embrayage électromagnétique, comprenant un électroaimant (2), un aimant permanent (3) et une plaque d'induit (4), qui coopère avec l'électroaimant (2) et l'aimant permanent (3) et qui est disposée sur un corps de moyeu (11) de manière fixe en rotation mais déplaçable axialement, dans lequel l'électroaimant (2) comporte un boîtier d'aimant (5) et une bobine (6) logée dans ce boîtier, le boîtier d'aimant (5) comportant un corps annulaire extérieur (15) du côté de la plaque d'induit fournissant un pôle extérieur et un corps annulaire intérieur (16) fournissant un pôle intérieur, de telle sorte que le corps annulaire intérieur (16) porte l'aimant permanent (3) du côté de la plaque d'induit et qu'une âme (17), servant de pont de flux magnétique et reliant le corps annulaire intérieur (16) au corps annulaire extérieur (15), est disposée entre le corps annulaire intérieur (16) et le corps annulaire extérieur (15), **caractérisé en ce qu'**un long circuit magnétique (19) traverse le boîtier d'aimant (5) et qu'un court circuit magnétique parallèle (18) traverse l'âme (17), de sorte que, pendant l'opération de desserrage, une polarité opposée du circuit de bobine et du circuit d'aimant permanent (18, 19, 20, 21) se produit dans les faces polaires et une même polarité se produit dans le circuit magnétique court (18).

2. Frein ou embrayage électromagnétique selon la revendication 1, **caractérisé en ce que** le corps annulaire intérieur (16), le corps annulaire extérieur (15) et l'âme (17) sont formés d'un seul tenant.

3. Frein ou embrayage électromagnétique selon la revendication 1 ou 2, **caractérisé en ce que** le boîtier d'aimant (5) comprend un pot magnétique (9) qui fournit le corps d'anneau intérieur (16), le corps d'anneau extérieur (15) et l'âme (17) du côté de la plaque d'induit.

4. Frein ou embrayage électromagnétique selon l'une quelconque des revendications précédentes, **caractérisé en ce que** le pot magnétique (9) est réalisé en un matériau magnétique doux.

5. Frein ou embrayage électromagnétique selon l'une quelconque des revendications précédentes, **caractérisé en ce que** le pot magnétique (9) est fermé du côté de la plaque d'induit.

6. Frein ou embrayage électromagnétique selon l'une quelconque des revendications précédentes, **caractérisé en ce que** le corps annulaire extérieur (15) fait saillie axialement au-delà du corps annulaire intérieur (16) en direction de la plaque d'induit (4).

7. Frein ou embrayage électromagnétique selon l'une quelconque des revendications précédentes, **caractérisé en ce que** l'aimant permanent (3) porté par le corps annulaire intérieur (16) affleure le corps annulaire extérieur (15) du côté de la plaque d'induit.

8. Frein ou embrayage électromagnétique selon l'une quelconque des revendications précédentes, **caractérisé en ce que** l'aimant permanent (3) et/ou le corps d'anneau extérieur (15) présente, du côté de la plaque d'induit (4), une surface de friction qui interagit avec la plaque d'induit (4).

9. Frein ou embrayage électromagnétique selon la revendication 8, **caractérisé en ce que** la surface de friction est constituée par un revêtement de friction appliqué sur l'aimant permanent (3) et/ou sur le corps annulaire extérieur (15).

10. Frein ou embrayage électromagnétique selon l'une quelconque des revendications précédentes, **caractérisé en ce que** l'aimant permanent (3) est constitué d'un corps annulaire dont la dimension axiale est inférieure à son épaisseur de section transversale entre son diamètre intérieur et son diamètre extérieur.
